# EUROPEAN PATENT APPLICATION

(11) **EP 4 615 013 A1**
(43) Date of publication of application: **10.09.2025**
(21) Application number: 22964128.7
(22) Date of filing: 04.11.2022
(51) Int. Cl.: H04W 4/02, H04W 76/10, H04W 12/02, H04W 12/03

(54) **RANGING METHOD AND APPARATUS**

(71) Applicant: Beijing Xiaomi Mobile Software Co., Ltd., Beijing 100085 (CN)
(72) Inventor: LU, Wei, Beijing 100085 (CN)
(74) Representative: Stöckeler, Ferdinand
(86) International application number: PCT/CN2022/130135
(87) International publication number: WO 2024/092827

(57) **Abstract**

A ranging method and apparatus, applicable to the technical field of communications. The ranging method comprises: a network device (101) sends first indication information to a terminal device (102) according to service authorization information of the terminal device (102), the first indication information being used for instructing the terminal device (102) to enable transmission link security protection of the terminal device (102) participating in a ranging or sidelink positioning service, and the ranging or sidelink positioning service being triggered by the terminal device (102) at a sidelink client (S201), such that the privacy security of the terminal device (102) can be protected in the process of transmitting a result of the ranging or sidelink positioning service by means of a transmission link, thereby improving the security of the ranging or sidelink positioning service.

## Description

### TECHNICAL FIELD

The present disclosure relates to, but is not limited to, the field of communication technology, and specifically to a ranging method and apparatus.

### BACKGROUND

Ranging or sidelink (SL) positioning service refers to determining a distance between two terminals (also called user equipment, UE) and/or a direction from one UE to another UE through a direct communication connection. The fifth generation mobile communication technology (5G) system is able to provide services such as ranging or SL positioning. A sidelink client UE can call the ranging or SL positioning service to obtain a result of the ranging or SL positioning service between the two UEs. However, during transmission of the result of the ranging or SL positioning service, the privacy of the UE is not protected.

### SUMMARY

Embodiments of the present disclosure provide a ranging method and apparatus, which may protect privacy security of a terminal in a process of transmitting a result of a ranging or sidelink positioning service through a transmission link, thereby improving security of the ranging or sidelink positioning service.

According to a first aspect of the embodiments of the present disclosure, a ranging method is provided, performed by a network device, including: sending first indication information to a terminal based on service authorization information of the terminal, in which the first indication information instructs the terminal to enable security protection of a transmission link for the terminal in participating in a ranging or sidelink positioning service, and the ranging or sidelink positioning service is triggered by a sidelink client terminal.

In this embodiment of the present disclosure, the network device may send the first indication information to the terminal based on the service authorization information of the terminal, in which the first indication information is used to instruct the terminal to enable the security protection of the transmission link for the terminal in participating in the ranging or sidelink positioning service, and the ranging or sidelink positioning service is triggered by the sidelink client terminal, so that the privacy security of the terminal can be protected in the process of transmitting the result of the ranging or sidelink positioning service through the transmission link, thereby improving the security of the ranging or sidelink positioning service.

According to a second aspect of the embodiments of the present disclosure, a ranging method is provided, performed by a terminal, including: receiving first indication information sent by a network device, in which the first indication information instructs the terminal to enable security protection of a transmission link for the terminal in participating in a ranging or sidelink positioning service, and the ranging or sidelink positioning service is triggered by a sidelink client terminal.

In this embodiment of the present disclosure, the terminal may receive the first indication information sent by the network device, in which the first indication information is used to instruct the terminal to enable the security protection of the transmission link for the terminal in participating in the ranging or sidelink positioning service, and the ranging or sidelink positioning service is triggered by the sidelink client terminal, so that the privacy security of the terminal can be protected in the process of transmitting the result of the ranging or sidelink positioning service through the transmission link, thereby improving the security of the ranging or sidelink positioning service.

According to a third aspect of the embodiments of the present disclosure, a ranging method is provided, performed by a terminal, including: enabling security protection of a transmission link for the terminal in participating in a ranging or sidelink positioning service, in response to the terminal participating in the ranging or sidelink positioning service, in which the ranging or sidelink positioning service is triggered by a sidelink client terminal.

In this embodiment of the present disclosure, the terminal may enable the security protection of the transmission link for the terminal in participating in the ranging or sidelink positioning service in response to the terminal participating in the ranging or sidelink positioning service, in which the ranging or sidelink positioning service is triggered by the sidelink client terminal, so that the privacy security of the terminal can be protected in the process of transmitting the result of the ranging or sidelink positioning service through the transmission link, thereby improving the security of the ranging or sidelink positioning service.

According to a fourth aspect of the embodiments of the present disclosure, a communication apparatus is provided. The communication apparatus has some or all of the functions of the network device in the method embodiments in the first aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, the communication apparatus may include a transceiver unit and a processing unit, in which the processing unit is configured to support the communication apparatus to perform the corresponding functions in the above method, the transceiver unit is configured to support a communication between the communication apparatus and other devices. The communication apparatus may also include a storage unit, in which the storage unit is configured to couple with the transceiver unit and the processing unit, and save a computer program and data necessary for the communication apparatus.

As an example, the processing unit may be a processor, the transceiver unit may be a transceiver or a communication interface, and the storage unit be a memory.

According to a fifth aspect of the embodiments of the present disclosure, a communication apparatus is provided. The communication apparatus has some or all of the functions of the terminal in the method embodiments in the second aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, the communication apparatus may include a transceiver unit and a processing unit, in which the processing unit is configured to support the communication apparatus to perform the corresponding functions in the above method, the transceiver unit is configured to support a communication between the communication apparatus and other devices. The communication apparatus may also include a storage unit, in which the storage unit is configured to couple with the transceiver unit and the processing unit, and save a computer program and data necessary for the communication apparatus.

As an example, the processing unit may be a processor, the transceiver unit may be a transceiver or a communication interface, and the storage unit be a memory.

According to a sixth aspect of the embodiments of the present disclosure, a communication apparatus is provided. The communication apparatus has some or all of the functions of the terminal in the method embodiments in the third aspect above, for example, the communication apparatus may have the functions in some or all of the embodiments of the present disclosure or may have the functions for independently implementing any one of the embodiments of the present disclosure. The functions may be realized by hardware or by software which is executed by hardware. The hardware or software includes one or more units or modules corresponding to the above functions.

In an implementation, the communication apparatus may include a transceiver unit and a processing unit, in which the processing unit is configured to support the communication apparatus to perform the corresponding functions in the above method, the transceiver unit is configured to support a communication between the communication apparatus and other devices. The communication apparatus may also include a storage unit, in which the storage unit is configured to couple with the transceiver unit and the processing unit, and save a computer program and data necessary for the communication apparatus.

As an example, the processing unit may be a processor, the transceiver unit may be a transceiver or a communication interface, and the storage unit be a memory.

According to a seventh aspect of the embodiments of the present disclosure, a communication apparatus including a processor. When a computer program stored in a memory is called by the processor, the method described in the first aspect is implemented.

According to an eighth aspect of the embodiments of the present disclosure, a communication apparatus including a processor. When a computer program stored in a memory is called by the processor, the method described in the second aspect is implemented.

According to a ninth aspect of the embodiments of the present disclosure, a communication apparatus including a processor. When a computer program stored in a memory is called by the processor, the method described in the third aspect is implemented.

According to a tenth aspect of the embodiments of the present disclosure, a communication apparatus including a processor and a memory for storing a computer program is provided. When the computer program stored in a memory is executed by the processor, the communication apparatus is caused to implement the method described in the first aspect.

According to an eleventh aspect of the embodiments of the present disclosure, a communication apparatus including a processor and a memory for storing a computer program is provided. When the computer program stored in a memory is executed by the processor, the communication apparatus is caused to implement the method described in the second aspect.

According to a twelfth aspect of the embodiments of the present disclosure, a communication apparatus including a processor and a memory for storing a computer program is provided. When the computer program stored in a memory is executed by the processor, the communication apparatus is caused to implement the method described in the third aspect.

According to a thirteenth aspect of the embodiments of the present disclosure, a communication apparatus is provided, including a processor and an interface circuit for receiving code instructions and sending the code instructions to the processor, in which the processor is configured to execute the code instructions to cause the apparatus to perform the method described in the first aspect.

According to a fourteenth aspect of the embodiments of the present disclosure, a communication apparatus is provided, including a processor and an interface circuit for receiving code instructions and sending the code instructions to the processor, in which the processor is configured to execute the code instructions to cause the apparatus to perform the method described in the second aspect.

According to a fifteenth aspect of the embodiments of the present disclosure, a communication apparatus is provided, including a processor and an interface circuit for receiving code instructions and sending the code instructions to the processor, in which the processor is configured to execute the code instructions to cause the apparatus to perform the method described in the third aspect.

According to a sixteenth aspect of the embodiments of the present disclosure, a computer-readable storage medium for storing instructions used by the network device is provided. When the instructions are executed, the network device is caused to implement the method described in the first aspect.

According to a seventeenth aspect of the embodiments of the present disclosure, a computer-readable storage medium for storing instructions used by the terminal is provided. When the instructions are executed, the terminal is caused to implement the method described in the second aspect.

According to an eighteenth aspect of the embodiments of the present disclosure, a computer-readable storage medium for storing instructions used by the terminal is provided. When the instructions are executed, the terminal is caused to implement the method described in the third aspect.

According to a nineteenth aspect of the embodiments of the present disclosure, a communication system is provided, in which the system includes the communication apparatus described in the fourth aspect and the communication apparatus described in the fifth aspect, or the system includes the communication apparatus described in the sixth aspect, or the system includes the communication apparatus described in the seventh aspect and the communication apparatus described in the eighth aspect, or the system includes the communication apparatus described in the ninth aspect, or the system includes the communication apparatus described in the tenth aspect and the communication apparatus described in the eleventh aspect, or the system includes the communication apparatus described in the twelfth aspect, or the system includes the communication apparatus described in the thirteenth aspect and the communication apparatus described in the fourteenth aspect, or the system includes the communication apparatus described in the fifteenth aspect.

According to a twentieth aspect of the embodiments of the present disclosure, a computer program product including a computer program is provided. When the computer program is running on a computer, the computer is caused to perform the method described in the first aspect.

According to a twenty first aspect of the embodiments of the present disclosure, a computer program product including a computer program is provided. When the computer program is running on a computer, the computer is caused to perform the method described in the second aspect.

According to a twenty second aspect of the embodiments of the present disclosure, a computer program product including a computer program is provided. When the computer program is running on a computer, the computer is caused to perform the method described in the third aspect.

According to a twenty third aspect of the embodiments of the present disclosure, a chip system is provided, including at least one processor and an interface configured to support the network device to perform the functions in the first aspect, for example, at least one of determining or processing data and information in the above method. In one possible design, the chip system also includes a memory for saving a computer program and data necessary for the source secondary node. The chip system may include a chip, or a chip and other discrete devices.

According to a twenty fourth aspect of the embodiments of the present disclosure, a chip system is provided, including at least one processor and an interface configured to support the terminal to perform the functions in the second aspect, for example, at least one of determining or processing data and information in the above method. In one possible design, the chip system also includes a memory for saving a computer program and data necessary for the source secondary node. The chip system may include a chip, or a chip and other discrete devices.

According to a twenty fifth aspect of the embodiments of the present disclosure, a chip system is provided, including at least one processor and an interface configured to support the terminal to perform the functions in the third aspect, for example, at least one of determining or processing data and information in the above method. In one possible design, the chip system also includes a memory for saving a computer program and data necessary for the source secondary node. The chip system may include a chip, or a chip and other discrete devices.

According to a twenty sixth aspect of the embodiments of the present disclosure, a computer program is provided. When the computer program is running on a computer, the computer is caused to implement the method described in the first aspect.

According to a twenty seventh aspect of the embodiments of the present disclosure, a computer program is provided. When the computer program is running on a computer, the computer is caused to implement the method described in the second aspect.

According to a twenty eighth aspect of the embodiments of the present disclosure, a computer program is provided. When the computer program is running on a computer, the computer is caused to implement the method described in the third aspect.

### BRIEF DESCRIPTION OF THE DRAWINGS

In order to clearly illustrate technical solutions of the embodiments and the background of the present disclosure, a brief description of drawings used in embodiments and the background is given below.
FIG. 1 is a schematic diagram of a communication system according to an embodiment of the present disclosure;
FIG. 2 is a flowchart of a ranging method according to an embodiment of the present disclosure;
FIG. 3 is a flowchart of a ranging method according to an embodiment of the present disclosure;
FIG. 4 is a schematic diagram of a communication among a reference UE, a target UE and a sidelink client UE;
FIG. 5 is a flowchart of a ranging method according to an embodiment of the present disclosure;
FIG. 6 is a schematic diagram of a communication among a reference UE, a target UE and a sidelink client UE;
FIG. 7 is a flowchart of a ranging method according to an embodiment of the present disclosure;
FIG. 8 is a flowchart of a ranging method according to an embodiment of the present disclosure;
FIG. 9 is a flowchart of a ranging method according to an embodiment of the present disclosure;
FIG. 10 is a flowchart of a ranging method according to an embodiment of the present disclosure;
FIG. 11 is a block diagram of a communication apparatus according to an embodiment of the present disclosure;
FIG. 12 is a block diagram of a communication apparatus according to an embodiment of the present disclosure;
FIG. 13 is a block diagram of a chip according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are only for the purpose of describing a particular embodiment and are not intended to limit the embodiments of the present disclosure. The terms "a" and "the" in the singular form as used in the embodiments of the present disclosure and the accompanying claims are also intended to include the majority form, unless the context clearly indicates otherwise. It should also be understood that the term "and/or" as used herein refers to and encompasses any or all possible combinations of one or more associated listed items.

It should be understood that although the terms first, second, third, etc. may be used to describe various information in the embodiments of the present disclosure, such information should not be limited to these terms. These terms are used only to distinguish the same type of information from one another. For example, without leaving the scope of the embodiments of the present disclosure, a first information may also be referred to as a second information, and likewise the second information may be referred to as the first information. Depending on the context, the words "in a case" and "if" used here can be interpreted as "when" or "in respond to determining".

For ease of understanding, terms involved in the disclosure are introduced first.

Bottom-layer direct cellular communication protocol interface link (i.e., PC5 link)

In order to support a direct communication between terminals, an SL communication mode is introduced, an interface between two terminals is a PC5 interface, and a link between the two terminals for the direct communication through the PC5 interface is the PC5 link.

### Uu link

A terminal communicates with another terminal through a network device, an interface between the two terminals is a Uu interface, and a link between the two terminals for communication through the Uu interface is the Uu link.

### Sidelink positioning service

Link positioning service, also known as sidelink positioning service or ranging service, refers to determining a distance between two UEs and/or a direction from one UE to another UE through a direct communication connection.

### Reference terminal (Reference UE)

Reference UE is a terminal within a network coverage that can execute the Uu interface-based positioning procedure and/or SL positioning. In the sidelink positioning service, the reference UE may assist the terminal that needs to be positioned in performing sidelink measurement.

### Target terminal (Target UE)

Target UE is a terminal whose position needs to be determined, that is, which needs to be positioned.

### Sidelink client terminal (SL client UE)

SL client UE is a third-party UE other than the reference UE and the target UE, and triggers a ranging/sidelink positioning service request on behalf of an application resident thereon. The sidelink client UE does not have to support ranging or sidelink positioning capabilities, but a transmission link needs to be established between the sidelink client UE and the reference UE or between the sidelink client UE and the target UE through the PC5 interface or through a 5G core network (5GC) to transmit the ranging or sidelink positioning service request and results.

In order to better understand a ranging method in the embodiments of the present disclosure, a communication system to which the embodiments of the present disclosure are applicable is firstly described as follows.

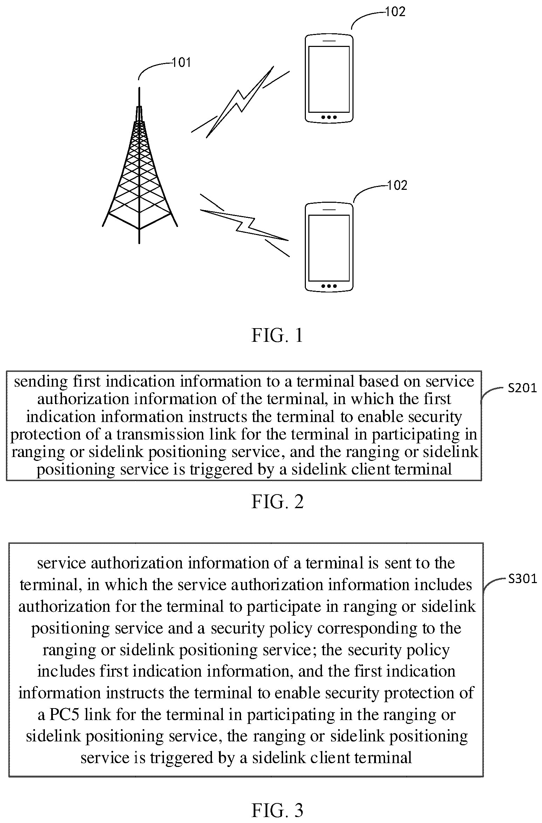

Please refer to FIG. 1, which is a schematic diagram of a communication system according to an embodiment of the present disclosure. The communication system may include, but is not limited to, one network device and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including one network device 101 and one terminal 12 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access point in a wireless fidelity (WiFi) system. The embodiments of the present disclosure do not limit the specific technology and the specific device form used by the network device. The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

It should be understood that the sidelink client UE may call the ranging or SL positioning service to obtain a result of the ranging or SL positioning service between the target UE and the reference UE, and the result of the ranging or SL positioning service contains privacy-sensitive UE location information, such as location information of the target UE and/or location information of the reference UE. If it is transmitted without protection, the UE location information in plain text may be exposed to attackers, thereby causing leakage of the UE's privacy information.

The embodiments of the present disclosure mainly address the problem of failure to protect the privacy of terminal during transmission of a result of ranging or SL positioning service between the sidelink client UE and the reference UE/target UE (reference UE or target UE), and propose a ranging method, in which a terminal such as the sidelink client UE, the target UE or the reference UE may enable security protection of a transmission link in participating in a ranging or sidelink positioning service triggered by the sidelink client UE, so that privacy security of the terminal can be protected in a process of transmitting the result of the ranging or sidelink positioning service through the transmission link, thereby improving security of the ranging or sidelink positioning service.

It should be noted that the ranging method provided in any embodiment of the present disclosure may be performed alone, or in combination with possible implementation methods in other embodiments, or in combination with any technical solution in the related technology. The network device mentioned in the embodiments of the present disclosure may refer to the network device 101 of the communication system, and the terminal mentioned in the embodiments of the present disclosure may refer to the terminal 102 of the communication system.

It can be understood that the network device in the embodiments of the present disclosure is a network element function in a core network, which is a core network device. The interaction between the terminal and the network device in each embodiment of the present disclosure is completed through transparent transmission of an access network device, which is not repeated in the embodiments of the present disclosure.

The ranging method and apparatus provided by the present disclosure are described in detail below with reference to the accompanying drawings.

With reference to FIG. 2, FIG. 2 is a flowchart of a ranging method according to an embodiment of the present disclosure. The ranging method is performed by a network device. As shown in FIG. 2, the method may include, but is not limited to, the following steps.

At step S201, first indication information is sent to a terminal based on service authorization information of the terminal, in which the first indication information instructs the terminal to enable security protection of a transmission link for the terminal in participating in a ranging or sidelink positioning service, and the ranging or sidelink positioning service is triggered by a sidelink client terminal.

The terminal may be configured as a sidelink client UE to participate in the ranging or sidelink positioning service triggered by the sidelink client UE, and may be configured as a target UE or a reference UE to participate in the ranging or sidelink positioning service triggered by a sidelink client UE. Accordingly, the terminal may refer to the sidelink client UE, or may also refer to the target UE, or may also refer to the reference UE, which is not limited in the disclosure.

The transmission link is used to transmit a result of the ranging or sidelink positioning service. The result of the ranging or sidelink positioning service may include a relative distance and/or relative angle between the reference UE and the target UE, etc., which is not limited in the disclosure.

It should be understood that the network device may authorize the terminal to participate in at least one service and configure a security policy corresponding to each service. Accordingly, the service authorization information of the terminal may include at least one service that the terminal is authorized to participate in and a security policy corresponding to each service.

Optionally, the network device may authorize the terminal to participate in the ranging or sidelink positioning service, in which the ranging or sidelink positioning service is triggered by the sidelink client terminal, and a security policy corresponding to the ranging or sidelink positioning service is configured. Accordingly, the service authorization information of the terminal may include authorization for the terminal to participate in the ranging or sidelink positioning service and a security policy corresponding to the ranging or sidelink positioning service.

Optionally, the network device may configure the security policy corresponding to the ranging or sidelink positioning service to include the first indication information. The first indication information may include, for example, "REQUIRED" to instruct the terminal to enable the security protection of the transmission link for the terminal in participating in the ranging or sidelink positioning service, and the network device may send the first indication information to the terminal in the case where the terminal is authorized to participate in the ranging or sidelink positioning service, so that the terminal enables the security protection of the transmission link for the terminal in participating in the ranging or sidelink positioning service according to the first indication information.

Since the terminal may enable the security protection of the transmission link for the terminal in participating in the ranging or sidelink positioning service according to the first indication information sent by the network device, the privacy security of the terminal such as the reference UE and the target UE can be protected in the process of transmitting the result of the ranging or sidelink positioning service through the transmission link when the terminal participates in the ranging or sidelink positioning service, thereby improving the security of the ranging or sidelink positioning service.

Optionally, the network device may be at least one of the following network element functions: Policy Control Function (PCF); Direct Discovery Name Management Function (DDNMF); ProSe Key Management Function (PKMF); or Session Management Function (SMF).

Optionally, the terminal enabling the security protection of the transmission link for the terminal in participating in the ranging or sidelink positioning service may include the terminal activating an integrity and/or confidentiality protection mechanism of the transmission link. Optionally, the terminal may activate the integrity and/or confidentiality protection mechanism of the transmission link during establishment of the transmission link according to the first indication information. Thus, in the process that the terminal participates in the ranging or sidelink positioning service triggered by the sidelink client terminal and transmits the result of the ranging or sidelink positioning service through the transmission link, the privacy security of the terminal such as the reference UE and the target UE can be protected, thereby improving the security of the ranging or sidelink positioning service.

In the ranging method provided in this embodiment of the present disclosure, the network device sends the first indication information to the terminal according to the service authorization information of the terminal, in which the first indication information is used to instruct the terminal to enable the security protection of the transmission link for the terminal in participating in the ranging or sidelink positioning service, and the ranging or sidelink positioning service is triggered by the sidelink client terminal. In this way, the privacy security of the terminal can be protected in the process of transmitting the result of the ranging or sidelink positioning service through the transmission link, thereby improving the security of the ranging or sidelink positioning service.

With reference to FIG. 3, FIG. 3 is a flowchart of a ranging method according to an embodiment of the present disclosure. The ranging method is performed by a network device. As shown in FIG. 3, the method may include, but is not limited to, the following steps.

At step S301, service authorization information of a terminal is sent to the terminal, in which the service authorization information includes authorization for the terminal to participate in a ranging or sidelink positioning service and a security policy corresponding to the ranging or sidelink positioning service; the security policy includes first indication information, and the first indication information instructs the terminal to enable security protection of a PC5 link for the terminal in participating in the ranging or sidelink positioning service, the ranging or sidelink positioning service is triggered by a sidelink client terminal.

The terminal may refer to the sidelink client UE, or may also refer to a target UE, or may also refer to a reference UE, which is not limited in the disclosure.

The PC5 link is used to transmit a result of the ranging or sidelink positioning service.

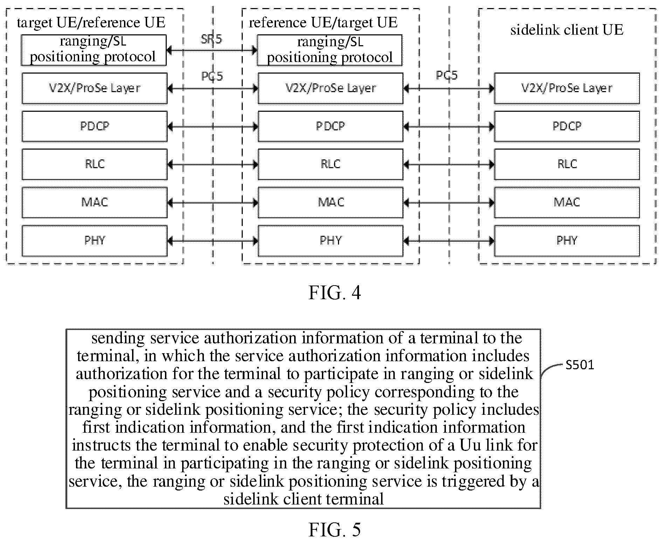

It can be understood that, with reference to FIG. 4, different terminals may communicate based on multiple protocol layers, such as ranging/SL positioning protocol layer, vehicle-to-everything (V2X) or proximity-based service (ProSe) layer (namely V2X/ProSe Layer in FIG. 4), packet data convergence protocol (PDCP) layer, radio link control (RLC) layer, media access control (MAC) layer, physical layer (PHY). Different protocol layers correspond to different interfaces. The target UE and the reference UE may communicate through an SR5 link based on the ranging/SL positioning protocol layer, or communicate through the PC5 link based on the V2X/ProSe Layer. The sidelink client UE and the reference UE/target UE may communicate through the PC5 link based on the V2X/ProSe Layer. This means that the sidelink client UE should have a ProSe capability or a V2X capability, and the result of the ranging or sidelink positioning service is transmitted on the PC5 link from the reference UE or target UE to the sidelink client UE, in which the result of the ranging or sidelink positioning service is transmitted as payload of the PC5 link.

In the embodiments of the present disclosure, in order to protect privacy security of the terminal and improve security of the ranging or sidelink positioning service in the process of transmitting the result of the ranging or sidelink positioning service through the PC5 link, the network device may authorize the terminal to participate in the ranging or sidelink positioning service which is triggered by the sidelink client terminal, and configure the security policy corresponding to the ranging or sidelink positioning service. Accordingly, the service authorization information of the terminal may include authorization for the terminal to participate in the ranging or sidelink positioning service, and the security policy corresponding to the ranging or sidelink positioning service.

The network device may configure the security policy (for a control plane and a user plane) corresponding to the ranging or sidelink positioning service to include the first indication information, in which the first indication information may include, for example, "REQUIRED", to instruct the terminal to enable the security protection of the PC5 link for the terminal in participating in the ranging or sidelink positioning service, and the network device may send the service authorization information of the terminal to the terminal, so that the terminal enables the security protection of the PC5 link for the terminal in participating in the ranging or sidelink positioning service according to the first indication information in the service authorization information.

Since the terminal may enable the security protection of the PC5 link for the terminal in participating in the ranging or sidelink positioning service according to the first indication information in the service authorization information sent by the network device, the privacy security of the terminal such as the reference UE and the target UE can be protected in the process of transmitting the result of the ranging or sidelink positioning service through the PC5 link when the terminal participates in the ranging or sidelink positioning service, thereby improving the security of the ranging or sidelink positioning service.

Optionally, the network device may be at least one of the following network element functions: PCF; DDNMF; PKMF; or SMF.

Optionally, the terminal enabling the security protection of the PC5 link for the terminal in participating in the ranging or sidelink positioning service may include the terminal activating an integrity and/or confidentiality protection mechanism of the PC5 link. Optionally, the terminal may activate the integrity and/or confidentiality protection mechanism of the PC5 link during establishment of the PC5 link according to the first indication information. Thus, in the process that the terminal participates in the ranging or sidelink positioning service triggered by the sidelink client terminal and transmits the result of the ranging or sidelink positioning service through the PC5 link, the privacy security of the terminal such as the reference UE and the target UE can be protected, thereby improving the security of the ranging or sidelink positioning service.

In the ranging method provided in this embodiment of the present disclosure, the network device may send the service authorization information of a terminal to the terminal, in which the service authorization information includes authorization for the terminal to participate in the ranging or sidelink positioning service and the security policy corresponding to the ranging or sidelink positioning service; the security policy includes the first indication information, the first indication information is used to instruct the terminal to enable the security protection of the PC5 link for the terminal in participating in the ranging or sidelink positioning service, and the ranging or sidelink positioning service is triggered by the sidelink client terminal. In this way, the privacy security of the terminal can be protected in the process of transmitting the result of the ranging or sidelink positioning service through the PC5 link, thereby improving the security of the ranging or sidelink positioning service.

With reference to FIG. 5, FIG. 5 is a flowchart of a ranging method according to an embodiment of the present disclosure. The ranging method is performed by a network device. As shown in FIG. 5, the method may include, but is not limited to, the following steps.

**At** step S501, service authorization information of a terminal is sent to the terminal, in which the service authorization information includes authorization for the terminal to participate in a ranging or sidelink positioning service and a security policy corresponding to the ranging or sidelink positioning service; the security policy includes first indication information, and the first indication information instructs the terminal to enable security protection of a Uu link for the terminal in participating in the ranging or sidelink positioning service, the ranging or sidelink positioning service is triggered by a sidelink client terminal.

The terminal may refer to the sidelink client UE, or may also refer to a target UE, or may also refer to a reference UE, which is not limited in the disclosure.

The Uu link is used to transmit a result of the ranging or sidelink positioning service.

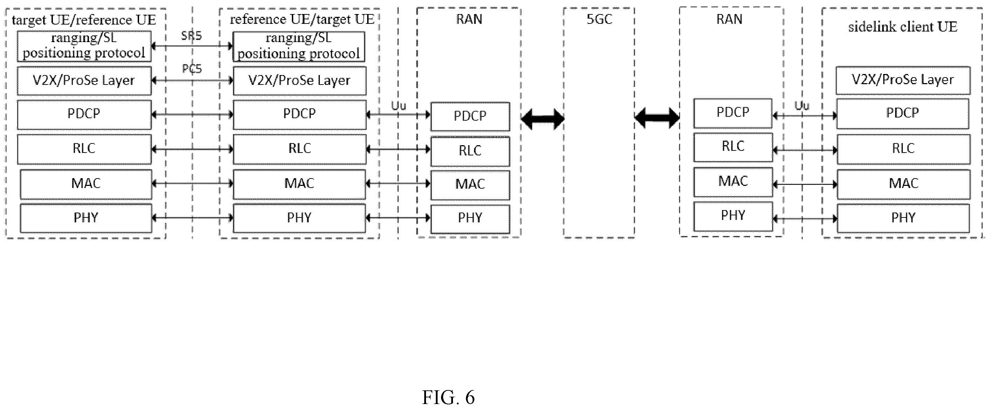

It can be understood that, with reference to FIG. 6, a terminal may communicate with other terminals or with the 5CG through a radio access network (RAN) based on multiple protocol layers, such as ranging/SL positioning protocol layer, V2X/ProSe Layer, PDCP layer, RLC layer, MAC layer, PHY layer. Different protocol layers correspond to different interfaces. The target UE and the reference UE may communicate through an SR5 link based on the ranging/SL positioning protocol layer, or communicate through the PC5 link based on the V2X/ProSe Layer. The reference UE/target UE may communicate with the 5GC through the Uu link of the RAN based on the PDCP protocol. The sidelink client UE may communicate with the 5GC through the Uu link of the RAN based on the PDCP protocol. This means that the result of the ranging or sidelink positioning service transmitted from the reference UE/target UE to the sidelink client UE is transmitted to the Uu link between the reference UE/target UE and the network device and the Uu link between the sidelink client UE and the network device.

In the embodiments of the present disclosure, in order to protect privacy security of the terminal and improve security of the ranging or sidelink positioning service in the process of transmitting the result of the ranging or sidelink positioning service through the Uu link, the network device may authorize the terminal to participate in the ranging or sidelink positioning service which is triggered by the sidelink client terminal, and configure the security policy corresponding to the ranging or sidelink positioning service. Accordingly, the service authorization information of the terminal may include authorization for the terminal to participate in the ranging or sidelink positioning service, and the security policy corresponding to the ranging or sidelink positioning service.

The network device may configure the security policy (for a user plane) corresponding to the ranging or sidelink positioning service to include the first indication information, in which the first indication information may include, for example, "REQUIRED", to instruct the terminal to enable the security protection of the Uu link for the terminal in participating in the ranging or sidelink positioning service, and the network device may send the service authorization information of the terminal to the terminal, so that the terminal enables the security protection of the Uu link for the terminal in participating in the ranging or sidelink positioning service according to the first indication information in the service authorization information.

Since the terminal may enable the security protection of the Uu link for the terminal in participating in the ranging or sidelink positioning service according to the first indication information in the service authorization information sent by the network device, the privacy security of the terminal such as the reference UE and the target UE can be protected in the process of transmitting the result of the ranging or sidelink positioning service through the Uu link when the terminal participates in the ranging or sidelink positioning service, thereby improving the security of the ranging or sidelink positioning service.

Optionally, the network device may be at least one of the following network element functions: PCF; DDNMF; PKMF; or SMF.

Optionally, the terminal enabling the security protection of the Uu link for the terminal in participating in the ranging or sidelink positioning service may include the terminal activating an integrity and/or confidentiality protection mechanism of the Uu link. Optionally, the terminal may activate the integrity and/or confidentiality protection mechanism of the Uu link during establishment of the Uu link according to the first indication information. Thus, in the process that the terminal participates in the ranging or sidelink positioning service triggered by the sidelink client terminal and transmits the result of the ranging or sidelink positioning service through the Uu link, the privacy security of the terminal such as the reference UE and the target UE can be protected, thereby improving the security of the ranging or sidelink positioning service.

It can be understood that if the result of the ranging or sidelink positioning service is transmitted from the reference UE or target UE to the 5GC via the Uu control plane and further transmitted to the sidelink client UE, an integrity and/or confidentiality protection mechanism for the result of the ranging or sidelink positioning service may be provided based on security of existing network attached storage (NAS).

If the result of the ranging or sidelink positioning service is transmitted from the reference UE or target UE to the 5GC via the Uu user plane and further transmitted to the sidelink client UE, the integrity and/or confidentiality protection mechanism for the result of the ranging or sidelink positioning service depends on a UP (user plane) security policy provided to the RAN by the 5GC (e.g., SMF) during establishment of a protocol data unit (PDU) session. In this case, the network device, such as the SMF, may configure the UP (user plane) security policy of the Uu link to include the first indication information when establishing the PDU session for the ranging or sidelink positioning service triggered by the sidelink client UE.

In the ranging method provided in this embodiment of the present disclosure, the network device may send the service authorization information of a terminal to the terminal, in which the service authorization information includes authorization for the terminal to participate in the ranging or sidelink positioning service and the security policy corresponding to the ranging or sidelink positioning service; the security policy includes the first indication information, the first indication information is used to instruct the terminal to enable the security protection of the Uu link for the terminal in participating in the ranging or sidelink positioning service, and the ranging or sidelink positioning service is triggered by the sidelink client terminal. In this way, the privacy security of the terminal can be protected in the process of transmitting the result of the ranging or sidelink positioning service through the Uu link, thereby improving the security of the ranging or sidelink positioning service.

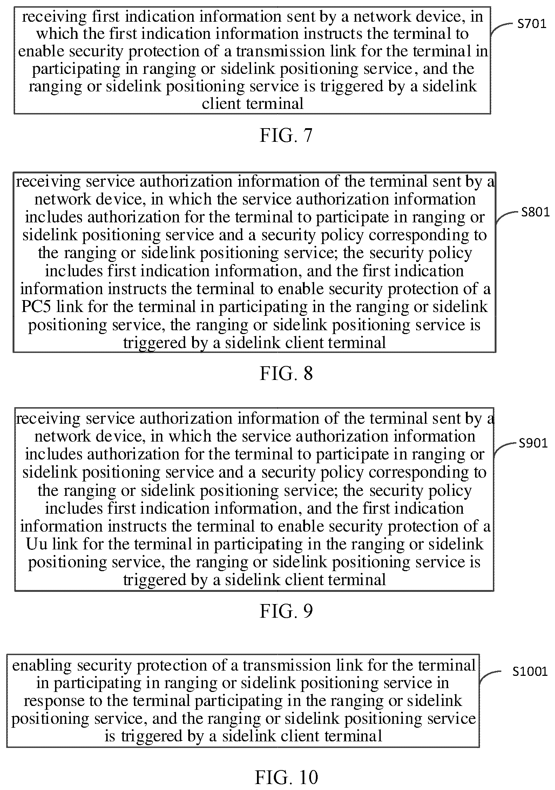

With reference to FIG. 7, FIG. 7 is a flowchart of a ranging method according to an embodiment of the present disclosure. The ranging method is performed by a terminal. As shown in FIG. 7, the method may include, but is not limited to, the following steps.

At step S701, first indication information sent by a network device is received, in which the first indication information instructs the terminal to enable security protection of a transmission link for the terminal in participating in a ranging or sidelink positioning service, and the ranging or sidelink positioning service is triggered by a sidelink client terminal.

The terminal may be configured as a sidelink client UE to participate in the ranging or sidelink positioning service triggered by the sidelink client UE, and may be configured as a target UE or a reference UE to participate in the ranging or sidelink positioning service triggered by a sidelink client UE. Accordingly, the terminal may refer to the sidelink client UE, or may also refer to the target UE, or may also refer to the reference UE, which is not limited in the disclosure.

The transmission link is used to transmit a result of the ranging or sidelink positioning service. The result of the ranging or sidelink positioning service may include a relative distance and/or relative angle between the reference UE and the target UE, etc., which is not limited in the disclosure.

**It** should be understood that the network device may authorize the terminal to participate in at least one service and configure a security policy corresponding to each service. Accordingly, the service authorization information of the terminal may include at least one service that the terminal is authorized to participate in and a security policy corresponding to each service.

Optionally, the network device may authorize the terminal to participate in the ranging or sidelink positioning service, in which the ranging or sidelink positioning service is triggered by the sidelink client terminal, and a security policy corresponding to the ranging or sidelink positioning service is configured. Accordingly, the service authorization information of the terminal may include authorization for the terminal to participate in the ranging or sidelink positioning service and a security policy corresponding to the ranging or sidelink positioning service.

Optionally, the network device may configure the security policy corresponding to the ranging or sidelink positioning service to include the first indication information. The first indication information may include, for example, "REQUIRED" to instruct the terminal to enable the security protection of the transmission link for the terminal in participating in the ranging or sidelink positioning service, and the network device may send the first indication information to the terminal in the case where the terminal is authorized to participate in the ranging or sidelink positioning service. Accordingly, the terminal may receive the first indication information sent by the network device, and enable the security protection of the transmission link for the terminal in participating in the ranging or sidelink positioning service according to the first indication information.

Since the terminal may enable the security protection of the transmission link for the terminal in participating in the ranging or sidelink positioning service according to the first indication information sent by the network device, the privacy security of the terminal such as the reference UE and the target UE can be protected in the process of transmitting the result of the ranging or sidelink positioning service through the transmission link when the terminal participates in the ranging or sidelink positioning service, thereby improving the security of the ranging or sidelink positioning service.

Optionally, the terminal enabling the security protection of the transmission link for the terminal in participating in the ranging or sidelink positioning service may include the terminal activating an integrity and/or confidentiality protection mechanism of the transmission link. Optionally, the terminal may activate the integrity and/or confidentiality protection mechanism of the transmission link during establishment of the transmission link according to the first indication information. Thus, in the process that the terminal participates in the ranging or sidelink positioning service triggered by the sidelink client terminal and transmits the result of the ranging or sidelink positioning service through the transmission link, the privacy security of the terminal such as the reference UE and the target UE can be protected, thereby improving the security of the ranging or sidelink positioning service.

In the ranging method provided in this embodiment of the present disclosure, the terminal may receive the first indication information sent by the network device, in which the first indication information is used to instruct the terminal to enable the security protection of the transmission link for the terminal in participating in the ranging or sidelink positioning service, and the ranging or sidelink positioning service is triggered by the sidelink client terminal. In this way, the privacy security of the terminal can be protected in the process of transmitting the result of the ranging or sidelink positioning service through the transmission link, thereby improving the security of the ranging or sidelink positioning service.

With reference to FIG. 8, FIG. 8 is a flowchart of a ranging method according to an embodiment of the present disclosure. The ranging method is performed by a terminal. As shown in FIG. 8, the method may include, but is not limited to, the following steps.

At step S801, service authorization information of the terminal sent by a network device is received, in which the service authorization information includes authorization for the terminal to participate in a ranging or sidelink positioning service and a security policy corresponding to the ranging or sidelink positioning service; the security policy includes first indication information, and the first indication information instructs the terminal to enable security protection of a PC5 link for the terminal in participating in the ranging or sidelink positioning service, the ranging or sidelink positioning service is triggered by a sidelink client terminal.

The terminal may refer to the sidelink client UE, or may also refer to a target UE, or may also refer to a reference UE, which is not limited in the disclosure.

The PC5 link is used to transmit a result of the ranging or sidelink positioning service.

**It** can be understood that, with reference to FIG. 4, different terminals may communicate based on multiple protocol layers, such as ranging/SL positioning protocol layer, V2X/ProSe Layer, PDCP layer, RLC layer, MAC layer, PHY layer. Different protocol layers correspond to different interfaces. The target UE and the reference UE may communicate through an SR5 link based on the ranging/SL positioning protocol layer, or communicate through the PC5 link based on the V2X/ProSe Layer. The sidelink client UE and the reference UE/target UE may communicate through the PC5 link based on the V2X/ProSe Layer. This means that the sidelink client UE should have a ProSe capability or a V2X capability, and the result of the ranging or sidelink positioning service is transmitted on the PC5 link from the reference UE or target UE to the sidelink client UE, in which the result of the ranging or sidelink positioning service is transmitted as payload of the PC5 link.

In the embodiments of the present disclosure, in order to protect privacy security of the terminal and improve security of the ranging or sidelink positioning service in the process of transmitting the result of the ranging or sidelink positioning service through the PC5 link, the network device may authorize the terminal to participate in the ranging or sidelink positioning service which is triggered by the sidelink client terminal, and configure the security policy corresponding to the ranging or sidelink positioning service. Accordingly, the service authorization information of the terminal may include authorization for the terminal to participate in the ranging or sidelink positioning service, and the security policy corresponding to the ranging or sidelink positioning service.

The network device may configure the security policy (for a control plane and a user plane) corresponding to the ranging or sidelink positioning service to include the first indication information, in which the first indication information may include, for example, "REQUIRED", to instruct the terminal to enable the security protection of the PC5 link for the terminal in participating in the ranging or sidelink positioning service, and the network device may send the service authorization information of the terminal to the terminal. Accordingly, the terminal may receive the service authorization information sent by the network device, and enable the security protection of the PC5 link for the terminal in participating in the ranging or sidelink positioning service according to the first indication information in the service authorization information.

Since the terminal may enable the security protection of the PC5 link for the terminal in participating in the ranging or sidelink positioning service according to the first indication information in the service authorization information sent by the network device, the privacy security of the terminal such as the reference UE and the target UE can be protected in the process of transmitting the result of the ranging or sidelink positioning service through the PC5 link when the terminal participates in the ranging or sidelink positioning service, thereby improving the security of the ranging or sidelink positioning service.

Optionally, the network device may be at least one of the following network element functions: PCF; DDNMF; PKMF; or SMF.

Optionally, the terminal enabling the security protection of the PC5 link for the terminal in participating in the ranging or sidelink positioning service may include the terminal activating an integrity and/or confidentiality protection mechanism of the PC5 link. Optionally, the terminal may activate the integrity and/or confidentiality protection mechanism of the PC5 link during establishment of the PC5 link according to the first indication information. Thus, in the process that the terminal participates in the ranging or sidelink positioning service triggered by the sidelink client terminal and transmits the result of the ranging or sidelink positioning service through the PC5 link, the privacy security of the terminal such as the reference UE and the target UE can be protected, thereby improving the security of the ranging or sidelink positioning service.

In the ranging method provided in this embodiment of the present disclosure, the terminal may receive may the service authorization information of the terminal sent by the network device, in which the service authorization information includes authorization for the terminal to participate in the ranging or sidelink positioning service and the security policy corresponding to the ranging or sidelink positioning service; the security policy includes the first indication information, the first indication information is used to instruct the terminal to enable the security protection of the PC5 link for the terminal in participating in the ranging or sidelink positioning service, and the ranging or sidelink positioning service is triggered by the sidelink client terminal. In this way, the privacy security of the terminal can be protected in the process of transmitting the result of the ranging or sidelink positioning service through the PC5 link, thereby improving the security of the ranging or sidelink positioning service.

With reference to FIG. 9, FIG. 9 is a flowchart of a ranging method according to an embodiment of the present disclosure. The ranging method is performed by a terminal. As shown in FIG. 9, the method may include, but is not limited to, the following steps.

At step S901, service authorization information of the terminal sent by a network device is received, in which the service authorization information includes authorization for the terminal to participate in a ranging or sidelink positioning service and a security policy corresponding to the ranging or sidelink positioning service; the security policy includes first indication information, and the first indication information instructs the terminal to enable security protection of a Uu link for the terminal in participating in the ranging or sidelink positioning service, the ranging or sidelink positioning service is triggered by a sidelink client terminal.

The terminal may refer to the sidelink client UE, or may also refer to a target UE, or may also refer to a reference UE, which is not limited in the disclosure.

The Uu link is used to transmit a result of the ranging or sidelink positioning service.

It can be understood that, with reference to FIG. 6, a terminal may communicate with other terminals or with the 5CG through a radio access network (RAN) based on multiple protocol layers, such as ranging/SL positioning protocol layer, V2X/ProSe Layer, PDCP layer, RLC layer, MAC layer, PHY layer. Different protocol layers correspond to different interfaces. The target UE and the reference UE may communicate through an SR5 link based on the ranging/SL positioning protocol layer, or communicate through the PC5 link based on the V2X/ProSe Layer. The reference UE/target UE may communicate with the 5GC through the Uu link of the RAN based on the PDCP protocol. The sidelink client UE may communicate with the 5GC through the Uu link of the RAN based on the PDCP protocol. This means that the result of the ranging or sidelink positioning service transmitted from the reference UE/target UE to the sidelink client UE is transmitted to the Uu link between the reference UE/target UE and the network device and the Uu link between the sidelink client UE and the network device.

In the embodiments of the present disclosure, in order to protect privacy security of the terminal and improve security of the ranging or sidelink positioning service in the process of transmitting the result of the ranging or sidelink positioning service through the Uu link, the network device may authorize the terminal to participate in the ranging or sidelink positioning service which is triggered by the sidelink client terminal, and configure the security policy corresponding to the ranging or sidelink positioning service. Accordingly, the service authorization information of the terminal may include authorization for the terminal to participate in the ranging or sidelink positioning service, and the security policy corresponding to the ranging or sidelink positioning service.

The network device may configure the security policy (for a user plane) corresponding to the ranging or sidelink positioning service to include the first indication information, in which the first indication information may include, for example, "REQUIRED", to instruct the terminal to enable the security protection of the Uu link for the terminal in participating in the ranging or sidelink positioning service, and the network device may send the service authorization information of the terminal to the terminal. Accordingly, the terminal may enable the security protection of the Uu link for the terminal in participating in the ranging or sidelink positioning service according to the first indication information in the service authorization information.

Since the terminal may enable the security protection of the Uu link for the terminal in participating in the ranging or sidelink positioning service according to the first indication information in the service authorization information sent by the network device, the privacy security of the terminal such as the reference UE and the target UE can be protected in the process of transmitting the result of the ranging or sidelink positioning service through the Uu link when the terminal participates in the ranging or sidelink positioning service, thereby improving the security of the ranging or sidelink positioning service.

Optionally, the network device may be at least one of the following network element functions: PCF; DDNMF; PKMF; or SMF.

Optionally, the terminal enabling the security protection of the Uu link for the terminal in participating in the ranging or sidelink positioning service may include the terminal activating an integrity and/or confidentiality protection mechanism of the Uu link. Optionally, the terminal may activate the integrity and/or confidentiality protection mechanism of the Uu link during establishment of the Uu link according to the first indication information. Thus, in the process that the terminal participates in the ranging or sidelink positioning service triggered by the sidelink client terminal and transmits the result of the ranging or sidelink positioning service through the Uu link, the privacy security of the terminal such as the reference UE and the target UE can be protected, thereby improving the security of the ranging or sidelink positioning service.

In the ranging method provided in this embodiment of the present disclosure, the terminal may receive the service authorization information of the terminal sent by the network device, in which the service authorization information includes authorization for the terminal to participate in the ranging or sidelink positioning service and the security policy corresponding to the ranging or sidelink positioning service; the security policy includes the first indication information, the first indication information is used to instruct the terminal to enable the security protection of the Uu link for the terminal in participating in the ranging or sidelink positioning service, and the ranging or sidelink positioning service is triggered by the sidelink client terminal. In this way, the privacy security of the terminal can be protected in the process of transmitting the result of the ranging or sidelink positioning service through the Uu link, thereby improving the security of the ranging or sidelink positioning service.

With reference to FIG. 10, FIG. 10 is a flowchart of a ranging method according to an embodiment of the present disclosure. The ranging method is performed by a terminal. As shown in FIG. 10, the method may include, but is not limited to, the following steps.

**At** step S1001, security protection of a transmission link for the terminal in participating in a ranging or sidelink positioning service is enabled in response to the terminal participating in the ranging or sidelink positioning service, and the ranging or sidelink positioning service is triggered by a sidelink client terminal.

The terminal may be configured as a sidelink client UE to participate in the ranging or sidelink positioning service triggered by the sidelink client UE, and may be configured as a target UE or a reference UE to participate in the ranging or sidelink positioning service triggered by a sidelink client UE. Accordingly, the terminal may refer to the sidelink client UE, or may also refer to the target UE, or may also refer to the reference UE, which is not limited in the disclosure.

The transmission link is used to transmit a result of the ranging or sidelink positioning service. The result of the ranging or sidelink positioning service may include a relative distance and/or relative angle between the reference UE and the target UE, etc., which is not limited in the disclosure.

In an embodiment of the present disclosure, when the terminal does not receive the first indication information sent by the network device, the terminal may, in response to the terminal participating in the ranging or sidelink positioning service, automatically enable the security protection of the transmission link for the terminal in participating in the ranging or sidelink positioning service, in which the first indication information instructs the terminal to enable the security protection of the transmission link for the terminal in participating in the ranging or sidelink positioning service.

Since the terminal may enable the security protection of the transmission link for the terminal in participating in the ranging or sidelink positioning service in response to the terminal participating in the ranging or sidelink positioning service, privacy security of the terminal such as the reference UE and the target UE can be protected in the process of transmitting the result of the ranging or sidelink positioning service through the transmission link when the terminal participates in the ranging or sidelink positioning service, thereby improving the security of the ranging or sidelink positioning service.

Optionally, enabling the security protection of the transmission link for the terminal in participating in the ranging or sidelink positioning service may include activating an integrity and/or confidentiality protection mechanism of the transmission link during establishment of the transmission link.

Specifically, during the establishment of the transmission link, the terminal may always activate the integrity and/or confidentiality protection mechanism on a control plane and a user plane. Thus, in the process that the terminal participates in the ranging or sidelink positioning service and transmits the result of the ranging or sidelink positioning service through the transmission link, the privacy security of the terminal such as the reference UE and the target UE can be protected, thereby improving the security of the ranging or sidelink positioning service.

Optionally, the transmission link may be a PC5 link, that is, in the case where the terminal communicates with other terminals through the PC5 link, since there is no need to communicate with the network device, the terminal may, in response to the terminal participating in the ranging or sidelink positioning service, automatically enable security protection of the PC5 link for the terminal in participating in the ranging or sidelink positioning service, so that the privacy security of the terminal can be protected in the process of transmitting the result of the ranging or sidelink positioning service through the PC5 link, thereby improving the security of the ranging or sidelink positioning service.

In summary, in the ranging method provided in this embodiment of the present disclosure, the terminal may enable the security protection of the transmission link for the terminal in participating in the ranging or sidelink positioning service in response to the terminal participating in the ranging or sidelink positioning service, in which the ranging or sidelink positioning service is triggered by the sidelink client terminal. Thus, the privacy security of the terminal can be protected in the process of transmitting the result of the ranging or sidelink positioning service through the transmission link, thereby improving the security of the ranging or sidelink positioning service.

It should be noted that terms "carry" and "include" have the same meaning in the present disclosure. "Include" in the present disclosure is an open limitation, that is, in addition to the contents specified in the present disclosure, it may also include contents that are not specified in the present disclosure but may appear in the future.

In the embodiments provided by the present disclosure, the methods provided by the embodiments of the present disclosure are introduced from the perspectives of the network device and the terminal. In order to implement the functions in the methods provided by the embodiments of the present disclosure, the network device and the terminal may include a hardware structure and a software module, and the functions are implemented in the form of the hardware structure, the software module, or the hardware structure plus the software module. A function of the functions may be executed in the form of the hardware structure, the software module, or the hardware structure plus the software module.

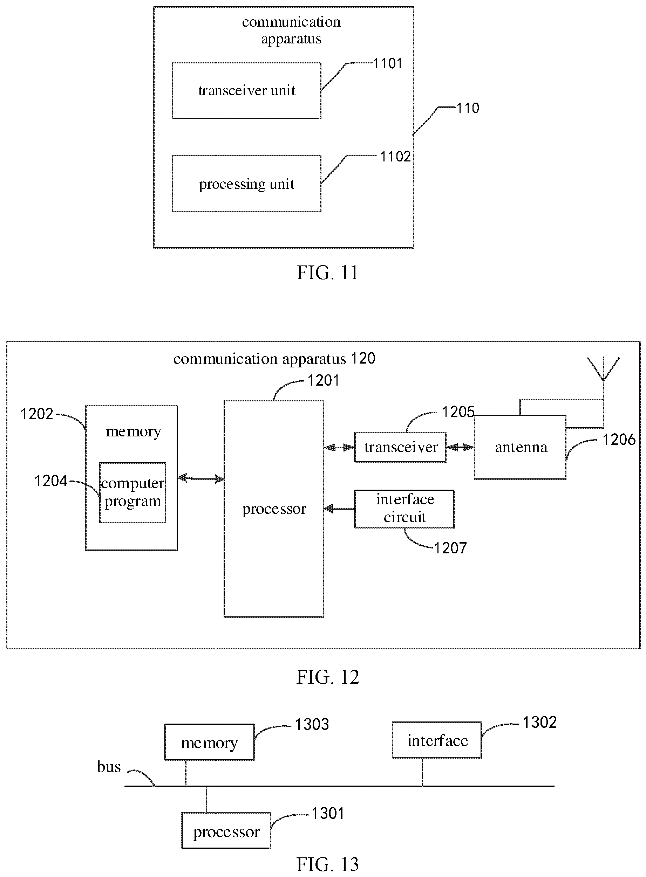

FIG. 11 is a block diagram of a communication apparatus 110 provided in an embodiment of the present disclosure. The communication apparatus 110 shown in FIG. 11 may include a transceiver unit 1101. The transceiver unit 1101 may include a sending unit and/or a receiving unit, in which the sending unit is used to implement a sending function, the receiving unit is used to implement a receiving function, and the transceiver unit 1101 may implement the sending function and/or the receiving function.

The communication apparatus 110 may be a network device, an apparatus in the network device, or an apparatus capable of being used in combination with the network device. Or the communication apparatus 110 may be a terminal, an apparatus in the terminal, or an apparatus capable of being used in combination with the terminal.

### The communication apparatus 110 is a network device.

The transceiver unit 1101 is configured to send first indication information to a terminal based on service authorization information of the terminal. The first indication information instructs the terminal to enable security protection of a transmission link for the terminal in participating in a ranging or sidelink positioning service, and the ranging or sidelink positioning service is triggered by a sidelink client terminal.

Optionally, enabling the security protection of the transmission link includes activating, by the terminal, an integrity and/or confidentiality protection mechanism of the transmission link.

Optionally, the transceiver unit 1101 is configured to send the service authorization information of the terminal to the terminal. The service authorization information includes authorization for the terminal to participate in the ranging or sidelink positioning service, and a security policy corresponding to the ranging or sidelink positioning service, in which the security policy includes the first indication information.

Optionally, the transmission link is at least one of a bottom-layer direct cellular communication protocol interface PC5 link or a Uu link.

Optionally, the network device is at least one of:
a policy control function (PCF);
a direct discovery name management function (DDNMF);
a proximity-based service key management function (PKMF); or
a session management function (SMF).

The communication apparatus 110 is a terminal (such as the terminal in the above method embodiments of FIG. 7-FIG. 9).

The transceiver unit 1101 is configured to receive first indication information sent by a network device. The first indication information instructs the terminal to enable security protection of a transmission link for the terminal in participating in a ranging or sidelink positioning service, and the ranging or sidelink positioning service is triggered by a sidelink client terminal.

Optionally, enabling the security protection of the transmission link includes: activating, by the terminal, an integrity and/or confidentiality protection mechanism of the transmission link.

Optionally, the transceiver unit 1101 is configured to receive service authorization information of the terminal sent by the network device. The service authorization information includes authorization for the terminal to participate in the ranging or sidelink positioning service, and a security policy corresponding to the ranging or sidelink positioning service, in which the security policy includes the first indication information.

Optionally, the transmission link is at least one of a bottom-layer direct cellular communication protocol interface PC5 link or a Uu link.

The communication apparatus 110 is a terminal (such as the terminal in the above method embodiments of FIG. 10).

The processing unit 1102 is configured to enable security protection of a transmission link for the terminal in participating in a ranging or sidelink positioning service, in response to the terminal participating in the ranging or sidelink positioning service. The ranging or sidelink positioning service is triggered by a sidelink client terminal.

Optionally, enabling the security protection of the transmission link for the terminal in participating in the ranging or sidelink positioning service includes:
activating an integrity and/or confidentiality protection mechanism of the transmission link during establishment of the transmission link.

Optionally, the transmission link is a bottom-layer direct cellular communication protocol interface PC5 link.

FIG. 12 is a block diagram of a communication apparatus 120 according to an embodiment of the present disclosure. The communication apparatus 120 may be a network device, or may be a terminal, or may be a chip, a chip system, a processor, etc. that supports the network device to implement the method, or may be a chip, a chip system, a processor, etc. that supports the terminal to implement the method. The apparatus may be used to implement the method in the above method embodiments. For details, please refer to the above method embodiments.

The communication apparatus 120 may include one or more processors 1201. The processor 1201 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 120 may also include one or more memories 1202 for storing the computer program 1204. The processor 1201 executes the computer program 1204, to cause the communication apparatus 120 to implement the method in the above method embodiments. Optionally, the memory 1202 may also store data. The communication apparatus 120 and the memory 1202 may be set up separately or integrated together.

Optionally, the communication apparatus 120 may also include a transceiver 1205 and an antenna 1206. The transceiver 1205 may be called a transceiver unit, a transceiver machine, or a transceiver circuit, etc., to implement the receiving and sending function. The transceiver 1205 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 120 may also include one or more interface circuits 1207. The interface circuit 1207 is used to receive code instructions and transmit the code instructions to the processor 1201. The processor 1201 runs the code instructions to cause the communication apparatus 120 to implement the method in the above method embodiments.

The communication apparatus 120 is a network device: the transceiver 1205 is configured to execute step S201 in FIG. 2; step S301 in FIG. 3; step S501 in FIG. 5.

The communication apparatus 120 is a terminal (such as the terminal in the aforementioned method embodiments of FIG. 7-FIG 9): the transceiver 1205 is configured to execute step S701 in FIG. 7; step S801 in FIG. 8; step S901 in FIG. 9.

The communication apparatus 120 is a terminal (such as the terminal in the aforementioned method embodiments of FIG. 10): the transceiver 1205 is configured to execute step S1001 in FIG. 10.

**In** an implementation, the processor 1201 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

**In** an implementation, the processor 1201 may store a computer program 1203. When the computer program 1203 is running on the processor 1201, the communication apparatus 120 is caused to implement the method in the above method embodiments. The computer program 1203 may be solidified in the processor 1601, in which case the processor 1201 may be implemented in hardware.

**In** an implementation, the communication apparatus 120 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal, but the scope of the communication apparatus in the disclosure is not limited to this, and the structure of the communication apparatus may not be restricted by FIG. 12. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
**(5)** a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the structural diagram of a chip in FIG. 13. The chip shown in FIG. 13 includes a processor 1301 and an interface 1302. There may be one or more processors 1301, and there may be one or more interfaces 1302.

For the situation that the chip is used to perform the functions of the network device in the embodiments of the present disclosure:
the interface 1302 is configured to send first indication information to a terminal based on service authorization information of the terminal. The first indication information instructs the terminal to enable security protection of a transmission link for the terminal in participating in a ranging or sidelink positioning service, and the ranging or sidelink positioning service is triggered by a sidelink client terminal.

Optionally, enabling the security protection of the transmission link includes activating, by the terminal, an integrity and/or confidentiality protection mechanism of the transmission link.

Optionally, the interface 1302 is configured to send the service authorization information of the terminal to the terminal. The service authorization information includes authorization for the terminal to participate in the ranging or sidelink positioning service, and a security policy corresponding to the ranging or sidelink positioning service, in which the security policy includes the first indication information.

Optionally, the transmission link is at least one of a bottom-layer direct cellular communication protocol interface PC5 link or a Uu link.

Optionally, the network device is at least one of:
a policy control function (PCF);
a direct discovery name management function (DDNMF);
a proximity-based service key management function (PKMF); or
a session management function (SMF).

For the situation that the chip is used to perform the functions of the terminal (such as the terminal in the above method embodiments of FIG. 7-FIG. 9) in the embodiments of the present disclosure:
the interface 1302 is configured to receive first indication information sent by a network device. The first indication information instructs the terminal to enable security protection of a transmission link for the terminal in participating in a ranging or sidelink positioning service, and the ranging or sidelink positioning service is triggered by a sidelink client terminal.

Optionally, enabling the security protection of the transmission link includes: activating, by the terminal, an integrity and/or confidentiality protection mechanism of the transmission link.

Optionally, the interface 1302 is configured to receive service authorization information of the terminal sent by the network device. The service authorization information includes authorization for the terminal to participate in the ranging or sidelink positioning service, and a security policy corresponding to the ranging or sidelink positioning service, in which the security policy includes the first indication information.

Optionally, the transmission link is at least one of a bottom-layer direct cellular communication protocol interface PC5 link or a Uu link.

For the situation that the chip is used to perform the functions of the terminal (such as the terminal in the above method embodiments of FIG. 10) in the embodiments of the present disclosure:
the processor 1301 is configured to enable security protection of a transmission link for the terminal in participating in a ranging or sidelink positioning service, in response to the terminal participating in the ranging or sidelink positioning service. The ranging or sidelink positioning service is triggered by a sidelink client terminal.

Optionally, enabling the security protection of the transmission link for the terminal in participating in the ranging or sidelink positioning service includes:
activating an integrity and/or confidentiality protection mechanism of the transmission link during establishment of the transmission link.

Optionally, the transmission link is a bottom-layer direct cellular communication protocol interface PC5 link.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

**In** the embodiments of the present disclosure, a communication system is provided. The communication system includes the communication apparatus as a network device and the communication apparatus as a terminal (such as the sending terminal in the above method embodiments of FIG. 7-FIG. 9) in the foregoing embodiment of FIG. 12, or the communication system includes the communication apparatus as a terminal (such as the receiving terminal in the above method embodiments of FIG. 10) in the foregoing embodiment of FIG. 12, or the communication system includes the communication apparatus as a network device and the communication apparatus as a terminal (such as the sending terminal in the above method embodiments of FIG. 7-FIG. 9) in the foregoing embodiment of FIG. 13, or the communication system includes the communication apparatus as a terminal (such as the receiving terminal in the above method embodiments of FIG. 10) in the foregoing embodiment of FIG. 13.

In the embodiments of the present disclosure, a readable storage medium for storing instructions is provided. When the instructions are executed by a computer, the function of any one of the above method embodiments is performed.

**In** the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A ranging method, performed by a network device, comprising:
sending first indication information to a terminal based on service authorization information of the terminal, wherein the first indication information instructs the terminal to enable security protection of a transmission link for the terminal in participating in a ranging or sidelink positioning service, and the ranging or sidelink positioning service is triggered by a sidelink client terminal.

2. The method of claim 1, wherein enabling the security protection of the transmission link comprises:
activating, by the terminal, an integrity and/or confidentiality protection mechanism of the transmission link.

3. The method of claim 2, further comprising:
sending the service authorization information of the terminal to the terminal;
wherein the service authorization information comprises authorization for the terminal to participate in the ranging or sidelink positioning service, and a security policy corresponding to the ranging or sidelink positioning service, wherein the security policy comprises the first indication information.

4. The method of any of claims 1-3, wherein the transmission link is at least one of a bottom-layer direct cellular communication protocol interface PC5 link or a Uu link.

5. The method of any of claims 1-3, wherein the network device is at least one of:
a policy control function (PCF);
a direct discovery name management function (DDNMF);
a proximity-based service key management function (PKMF); or
a session management function (SMF).

6. A ranging method, performed by a terminal, comprising:
receiving first indication information sent by a network device, wherein the first indication information instructs the terminal to enable security protection of a transmission link for the terminal in participating in a ranging or sidelink positioning service, and the ranging or sidelink positioning service is triggered by a sidelink client terminal.

7. The method of claim 6, wherein enabling the security protection of the transmission link comprises:
activating, by the terminal, an integrity and/or confidentiality protection mechanism of the transmission link.

8. The method of claim 7, further comprising:
receiving service authorization information of the terminal sent by the network device;
wherein the service authorization information comprises authorization for the terminal to participate in the ranging or sidelink positioning service, and a security policy corresponding to the ranging or sidelink positioning service, wherein the security policy comprises the first indication information.

9. The method of any of claims 6-8, wherein the transmission link is at least one of a bottom-layer direct cellular communication protocol interface PC5 link or a Uu link.

10. A ranging method, performed by a terminal, comprising:
enabling security protection of a transmission link for the terminal in participating in a ranging or sidelink positioning service, in response to the terminal participating in the ranging or sidelink positioning service, wherein the ranging or sidelink positioning service is triggered by a sidelink client terminal.

11. The method of claim 10, wherein enabling the security protection of the transmission link for the terminal in participating in the ranging or sidelink positioning service comprises:
activating an integrity and/or confidentiality protection mechanism of the transmission link during establishment of the transmission link.

12. The method of claim 10 or 11, wherein the transmission link is a bottom-layer direct cellular communication protocol interface PC5 link.

13. A ranging apparatus, applied to a network device, comprising:
a transceiver unit, configured to send first indication information to a terminal based on service authorization information of the terminal, wherein the first indication information instructs the terminal to enable security protection of a transmission link for the terminal in participating in a ranging or sidelink positioning service, and the ranging or sidelink positioning service is triggered by a sidelink client terminal.

14. A ranging apparatus, applied to a terminal, comprising:
a transceiver unit, configured to receive first indication information sent by a network device, wherein the first indication information instructs the terminal to enable security protection of a transmission link for the terminal in participating in a ranging or sidelink positioning service, and the ranging or sidelink positioning service is triggered by a sidelink client terminal.

15. A ranging apparatus, applied to a terminal, comprising:
a processing unit, configured to enable security protection of a transmission link for the terminal in participating in a ranging or sidelink positioning service, in response to the terminal participating in the ranging or sidelink positioning service, wherein the ranging or sidelink positioning service is triggered by a sidelink client terminal.

16. A communication apparatus, comprising:
a processor; and
a memory for storing a computer program;
wherein the processor is configured to execute the computer program stored in the memory, to cause the apparatus to perform the method of any one of claims 1 to 5, or to perform the method of any one of claims 6 to 9, or to perform the method of any one of claims 10 to 12.

17. A communication apparatus, comprising: a processor and an interface circuit; wherein
the interface circuit is configured to receive code instructions and transmit the code instructions to the processor;
the processor is configured to execute the code instructions, to perform the method of any one of claims 1 to 5, or to perform the method of any one of claims 6 to 9, or to perform the method of any one of claims 10 to 12.

18. A computer-readable storage medium for storing instructions, wherein when the instructions are executed, the method of any one of claims 1 to 5 is implemented, or the method of any one of claims 6 to 9 is implemented, or the method of any one of claims 10 to 12 is implemented.

19. A communication system, comprising:
a network device, configured to perform the method of any of claims 1 to 5; and
a terminal, configured to perform the method of any of claims 6 to 9.

20. A communication system, comprising:
a terminal, configured to perform the method of any of claims 10 to 12.
